# EUROPEAN PATENT SPECIFICATION

(11) **EP 3 956 586 B1**
(45) Date of publication and mention of the grant of the patent: **25.06.2025**
(21) Application number: 20722985.7
(22) Date of filing: 16.04.2020
(51) Int. Cl.: F16J 15/18

(54) **SYSTEM AND METHOD FOR AUTOMATICALLY ENERGIZING PACKING MATERIAL WITH A PACKING LOADING ASSEMBLY**
SYSTEM UND VERFAHREN ZUR AUTOMATISCHEN ENERGETISIERUNG VON VERPACKUNGSMATERIAL MIT EINER VERPACKUNGSLADEVORRICHTUNG
SYSTÈME ET PROCÉDÉ POUR ACTIONNER AUTOMATIQUEMENT UN MATÉRIAU DE GARNITURE D'ÉTANCHÉITÉ AVEC UN ENSEMBLE DE MISE EN CHARGE DE GARNITURE D'ÉTANCHÉITÉ

(30) Priority: 18.04.2019 US 201962835966 P
(43) Date of publication of application: 23.02.2022
(73) Proprietor: A.W. Chesterton Company, Groveland, MA 01834 (US)
(72) Inventor: AZIBERT, Henri Vincent, Windham, NH 03087 (US); POWERS, Robert James, Salem Street Groveland, MA 01834 (US); GRIMANIS, Michael P., Wayland, MA 01778-1308 (US); MAHONEY, Philip Michael Jr., Roslindale, MA 02131 (US)
(74) Representative: Sweetinburgh, Mark Roger
(86) International application number: PCT/US2020/028494
(87) International publication number: WO 2020/214800

(56) References cited:
- WO-A1-2008/028235
- DE-U1- 9 116 517
- GB-A- 2 256 238
- US-B1- 6 502 827

## Description

### Background of the Invention

The present invention relates to packing material in a stationary equipment, and more specifically relates to a system and method of automatically energizing the packing material by applying a controllable axial load.

**In** some mechanical fields, a fluid tight seal must be effected between adjacent pieces of equipment. For example, one common application of sealing technology relates to a spinning shaft having fluid at one end. **In** such a situation, it may be desirable to prevent the fluid from leaking from around the shaft. Accordingly, as is known, a stuffing box may surround the shaft. The stuffing box may include a packing material, oftentimes referred to as a compression packing seal, which is wrapped around the rotating shaft and provides an interface and sealing surface between the rotating shaft and the stuffing box. The compression packing seal is typically composed of a series of stacked, axially abutting packing rings. A mechanical seal can also be employed to help effectuate shaft sealing by being mounted to the stuffing box instead of the packing material or alternatively the packing material can be incorporated into the mechanical seal.

The compression packing seal may be in the form of a braided material that is commonly square or round when viewed in cross section, although the compression packing seal may be provided in a variety of cross-sectional shapes. The compression packing seal may be cut to an appropriate size and wrapped around the shaft to form a ring. Multiple rings may be provided along the length of the shaft in order to provide a seal around the shaft. Suitable structure such as a packing gland can be used to secure and compress the compression packing seals inside the stuffing box. As the packing material is compressed, it expands radially to create a seal between the rotating shaft and the stationary stuffing box. The seal formed by the packing components forms a fluid seal and maintains a pressure boundary between the fluid inside the stuffing box and the external atmosphere.

A drawback of the conventional mounting techniques for the packing material is that the sealing ability of the packing material degrades over time. As such, an ever increasing amount of compression must be applied to the packing material in order to maintain the fluid seal.

**In** order to address this issue, conventional systems try to apply an axial force to the packing material to form and maintain the fluid seal between the stuffing box and the shaft. According to one conventional technique, known structure, such as gland bolts, can be used to apply the axial loading force to the packing material. As the packing material wears over time, however, the axial load on the packing material decreases and leakage occurs, so gland bolt adjustments are required on a regular basis. According to another conventional technique, Belleville washers or conical washers can be used to apply an axial force to the packing material. However, the axial load decreases as the springs elongate, and axial travel of the springs is limited.

GB2256238 discloses a sealing device for rotating shafts.

### Summary of the Invention

It is an object of the present invention to provide a shaft seal apparatus that allows gland packings to maintain sealing performance over time without requiring frequent adjustments or tightening of the sealing material. Another object of the present invention is to provide a remotely adjustable means of applying a substantially uniform and precise axial load to the packing material, which can compensate for wear of the packing material over time.

The scope of the present invention is as defined in the appended claims.

The present invention is directed to a pressure regulating system for use with a packing loading assembly and stationary equipment for applying a substantially uniform force or load to a stacked set of packing elements. The force applied to the packing elements can be regulated or controlled in real time and in a remote manner. The packing loading assembly includes a gland and an axially movable follower element that can be energized by pressurized fluid to move between a pre-loaded position where the follower element does not apply an axial load to the packing elements to a loaded position where the follower element applies the axial load to the packing elements. The axial load energizes the packing elements to form a fluid tight seal between the shaft and the packing elements as well as between the packing elements and selected surfaces of the stationary equipment.

According to one practice, the present invention is directed to a pressure regulating system for stationary equipment employing a stacked set of packing elements, comprising a fluid source for supplying a source of fluid, a pressure regulator for regulating the pressure of the fluid to form a pressurized fluid, and a packing loading assembly for sealing a process fluid within the stationary equipment and for applying an axial loading force to the packing elements via the pressurized fluid from the pressure regulator. The pressure regulator has an inlet for receiving the fluid from the fluid source and an outlet for supplying the pressurized fluid.

The pressure regulating system can also include a fluid regulator disposed between the fluid source and the pressure regulator for regulating the fluid flow therebetween. The fluid regulator can be a check valve.

The packing loading assembly includes a follower element movable in an axial direction, and a gland for housing the follower element. The gland comprises a main body having an upper surface, an opposed bottom surface and a side surface, a plurality of fastener-receiving apertures formed in the main body for seating a fastening element, a gland channel formed in the bottom surface of the main body forming a gland pressure chamber, and a fluid supply port formed in the side surface and fluidly communicating with the gland channel. The gland channel comprises a bottom wall surface and opposed first and second side wall surfaces, and a sealing channel formed in each of the opposed first and second side wall surfaces for seating a sealing element. The follower element comprises a first end having a bucket-like structure and an opposed second end having a stem-like structure, wherein the bucket-like structure has a generally U-shaped body having opposed first and second side walls and a bottom wall forming a pressure chamber. The stem-like structure has a foot portion at a terminal end thereof for contacting an axially outermost one of the plurality of packing elements.

The bucket-like structure of the follower element is sized and configured for seating at least partly within the gland channel of the gland. Further, the follower element is movable between a first pre-loaded position where follower element is disposed in an axially outermost position and a second loaded position where the follower element moves axially inwardly and the foot portion of the follower element contacts the axially outermost one of the plurality of packing elements and applies a loading force thereto.

According to another aspect, the gland channel of the gland has opposed side walls that are radially separated relative to each other and are connected by a bottom wall, and wherein the movable follower element is configured to move between a first pre-loaded position where the bucket-like structure of the follower element is disposed in the gland channel and where a top surface of the bucket-like structure contacts the bottom wall of the gland channel, and a second loaded position where the follower element moves axially inwardly and the top surface of the bucket-like structure is axially separated from the bottom wall surface of the gland channel. The gland pressure chamber of the gland and the pressure chamber of the follower element cooperate to form a pressurized chamber for selectively moving the follower element in an axial direction as a function of the pressure of the fluid within the pressurized chamber.

The system can also include an electronic device for communicating with and controlling the pressure regulator so as to control the pressure of the pressurized fluid exiting the outlet and conveyed to the packing loading assembly.

According to another practice, the present invention is directed to a packing loading assembly for mounting to stationary equipment employing a stacked set of packing elements, comprising a gland and a follower element. The gland includes a main body having an upper surface, an opposed bottom surface and a side surface, a plurality of fastener-receiving apertures formed in the main body for seating a fastening element, a gland channel formed in the bottom surface of the main body forming a gland pressure chamber, and a fluid supply port formed in the side surface and fluidly communicating with the channel. The follower element includes a first end having a bucket-like structure having a generally U-shaped body having opposed first and second side walls and a bottom wall forming a chamber, and an opposed second end having a stem-like structure, having a foot portion at a terminal end thereof for contacting an axially outermost one of the packing elements.

The gland pressure chamber and the chamber of the bucket-like structure are fluidly coupled so as to form a pressurized chamber for axially moving the follower element between a first pre-loaded position and a second loaded position. Further, the gland channel has first and second wall surfaces that are radially spaced apart and a bottom wall surface that is connected to the first and second wall surfaces. When the follower element is disposed in the first pre-loaded position, the bucket-like structure is disposed within the gland channel and a top surface of the bucket-like structure contacts the bottom wall surface of the gland channel. When the follower element is disposed in the second loaded position, the top surface of the bucket-like structure is axially separated from the bottom wall surface of the gland channel.

### Brief Description of the Drawings

These and other features and advantages of the present invention will be more fully understood by reference to the following detailed description in conjunction with the attached drawings in which like reference numerals refer to like elements throughout the different views. The drawings illustrate principals of the invention and, although not to scale, show relative dimensions.
FIG. 1 is a schematic block diagram of the pressure regulating system employing a packing loading assembly according to the teachings of the present invention.
FIG. 2 is a perspective view of the packing loading assembly for use with the pressure regulating system of FIG. 1 according to the teachings of the present invention.
FIG. 3 is a cross-sectional view of the packing loading assembly showing the movable follower element disposed in a preloaded position according to the teachings of the present invention.
FIG. 4 is a cross-sectional view of the packing loading assembly showing the movable follower element in a loaded position according to the teachings of the present invention.
FIG. 5 is a cross-sectional view of the follower element of the packing loading assembly according to the teachings of the present invention.
FIG. 6 is a schematic representation of a compact integrated structure housing

### Detailed Description

The present invention is directed to a pressure regulating system used in connection with a packing loading assembly to provide an axial loading force to packing material contained within stationary equipment in an automated manner. The axial force can be controlled or regulated by use of a pressure regulating system that applies an axial fluid force to a follower element that in turn applies an axial loading force to the packing material. Those skilled in the art will readily appreciate that the present invention may be implemented in a number of different applications and embodiments and is not specifically limited in its application to the particular embodiment depicted herein.

The term "shaft" as used herein is intended to refer to any suitable device in a mechanical system to which a seal can be mounted and includes shafts, rods and other known devices.

The terms "axial" and "axially" as used herein refer to a direction generally parallel to the axis of a shaft. The terms "radial" and "radially" as used herein refer to a direction generally perpendicular to the axis of a shaft. The terms "fluid" and "fluids" refer to liquids, gases, and combinations thereof.

The term "axially inner" as used herein refers to that portion of the stationary equipment and/or components of a mechanical seal that are disposed proximate to the stationary equipment (e.g., mechanical system) employing the mechanical seal. As such, this term also refers to the components of the mechanical seal or packing loading assembly that are mounted to or within the stationary equipment or are disposed the deepest within or closest to the equipment (e.g., inboard). Conversely, the term "axially outer" as used herein refers to the portion of stationary equipment and the mechanical seal or packing loading assembly that is disposed distal (e.g., outboard) from the equipment.

The term "radially inner" as used herein refers to the portion of the mechanical seal, packing loading assembly or associated components that are proximate to a shaft. Conversely, the term "radially outer" as used herein refers to the portion of the mechanical seal, packing loading assembly or associated components that are distal from the shaft.

The terms "stationary equipment," "stuffing box" and/or "static surface" as used herein are intended to include any suitable stationary structure housing a shaft or rod to which a mechanical seal or packing loading assembly having a gland is secured. The stationary structure can include any type of commercial or industrial equipment such as pumps, valves and the like. Those of ordinary skill in the relevant art will readily recognize that the gland assembly can form part of the mechanical seal, packing loading assembly or part of the stationary equipment.

The terms "process medium" and/or "process fluid" as used herein generally refer to the medium or fluid being transferred through the stationary equipment. In pump applications, for example, the process medium is the fluid being pumped through the pump housing.

The term "gland" as used herein is intended to include any suitable structure that enables, facilitates or assists securing the mechanical seal or the packing loading assembly to the stationary equipment, while concomitantly surrounding or housing, at least partially, one or more seal components. If desired, the gland can also provide fluid access to the mechanical seal.

The term "mechanical seal" as used herein is intended to include various types of sealing structure employed for sealing the process fluid between the movable (e.g., rotating) and stationary components of the stationary equipment and can include for example single seals, split seals, tandem seals, dual seals, concentric seals, gas seals, spiral seals, and other known seal types and configurations.

The term "packing material" as used herein is intended to include resilient and at least partially compressible materials for sealing a variety of fluids in a gland or stationary equipment under a wide array of pressures and temperatures.

The term "packing loading assembly" as used herein is intended to include any selected component or assembly of components, including at least for example a gland, for applying an axial loading pressure to the packing material so as to provide a seal between the stationary and movable components of at least the stationary equipment.

The term "ambient environment" or "ambient pressure" is intended to include any external environment or pressure other than the internal environment of the gland, packing loading assembly, mechanical seal or stationary equipment.

The present invention is directed to a packing loading assembly having a gland within which a sealed cavity houses a piston loaded follower element that acts on the packing material. The piston loaded follower element is activated by one or more externally regulated or controlled pressure sources that applies a pressure fluid or medium, such as for example by shop compressed air or a suitable water supply. A pressure regulator can be used to help adjust, vary or control the pressure within the gland and thus apply a generally or substantially constant or uniform axial loading force to the packing material. As the packing material relaxes over time due to wear, thermal cycling, vibration or pressure surges, the pressure fluid can be controlled, adjusted or varied to help maintain a generally or substantially constant or uniform load on the packing material. A fluid regulating element, such as a check valve, can be used in the supply line to the pressure regulator so that the load on the packing material is maintained even in the case of momentary interruption of the pressurizing fluid supply. The pressurized fluid supplies are commonly available in industrial or commercial plants. The desired load can be set remotely, in a convenient location and away from rotating machinery components, such as a shaft.

The present invention relates to a concept of an improved live pressure load packing loading assembly or system that automatically energizes packing material in stationary equipment to compensate for packing compression and wear over time. The present invention also allows for packing adjustment at a distance from rotating machinery parts. Once the packing material is installed and axially loaded with a suitable compressive force, the radial pressure in the packing needs to be equal to or greater than the process fluid pressure of the pump at the wet end to effect proper and adequate sealing. Packing material relaxation behaviors can be due to wear, thermal cycling, vibration or pressure surges.

A structural component, such as a piston loaded follower element, can be configured to supply a hydraulic or pneumatic axial force load to the packing material when mounted within the stationary equipment so as to restrict or prevent fluid leakage therefrom and to form a positive seal due to process fluid pressure from the equipment, such as a pump. The gland component can be fixed to the housing of the stationary equipment and preferably accommodates the follower component.

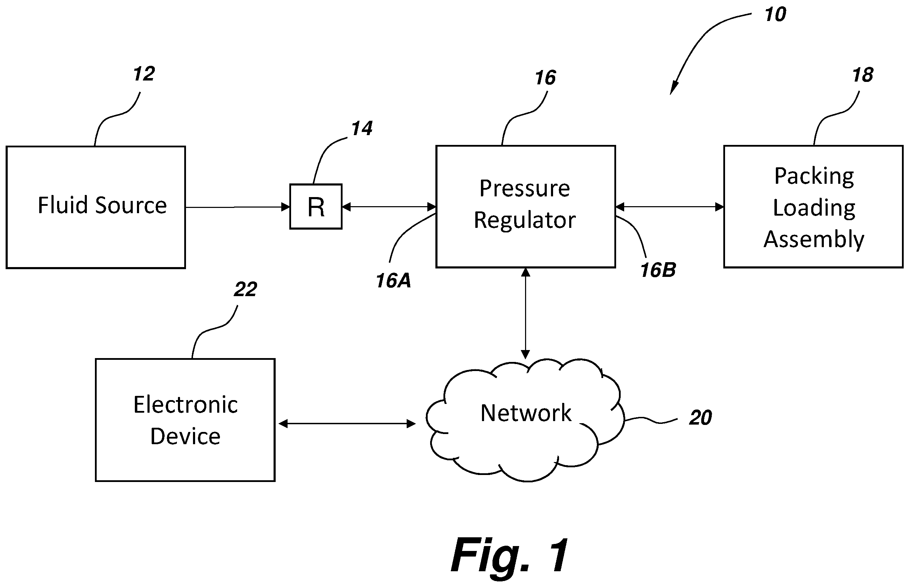

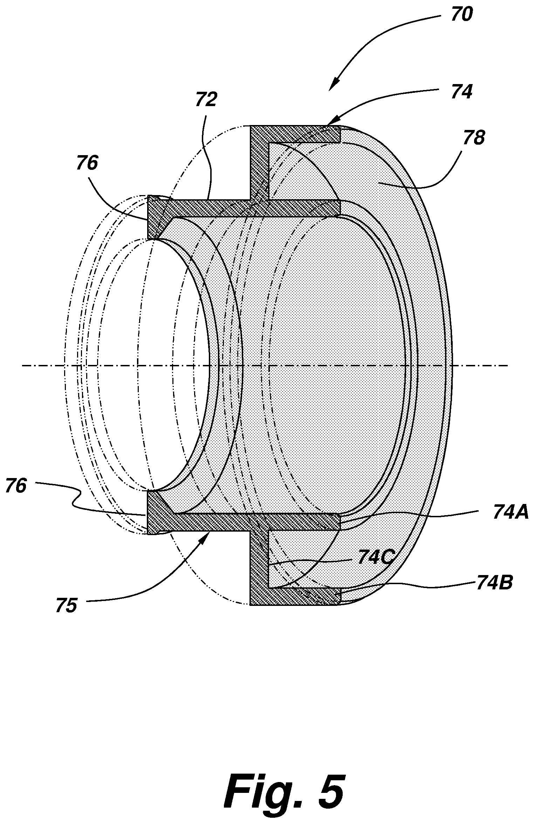

FIG. 1 illustrates the pressure regulating system 10 of the present invention. The pressure regulating system 10 includes a pressurized fluid source 12 for housing and supplying a pressurized fluid to the packing loading assembly 18. The fluid can be a gas, such as air or nitrogen, or a liquid, such as water. The fluid source 12 is coupled through appropriate piping or mechanical connections to a pressure regulator 16 by way of a fluid regulating device 14. The pressure regulator 16 can be any suitable structure or device for regulating or controlling the pressure of a fluid to a desired value. The pressure regulator 16 has a fluid inlet 16A for receiving the fluid from the fluid source 12 and a fluid outlet 16B for passing the outlet fluid to the packing loading assembly 18. The fluid from the pressurized fluid source enters the fluid inlet 16A at a first higher pressure and typically exits the pressure regulator at the fluid outlet 16B at a second pressure, which can be lower than or substantially equivalent to the inlet pressure. The pressure regulator 16 can include mechanical structure such as a pressure setting or regulating element 16C, FIG. 5, which can include a spring, that is coupled to a sensor, such as a diaphragm or bellows as is known in the art. The sensor can be configured to sense or detect the pressure of the fluid at the outlet. The sensor is in turn coupled to a restrictor element, such as a valve seat portion, that can be axially moved so as to control, adjust or vary the amount of fluid exiting the regulator, thus controlling the pressure of the fluid at the outlet. The pressure regulator can employ feedback of the regulated pressure as an input to the setting or control mechanism of the regulator and can react to changes in the feedback pressure to control the opening of the restrictor element. The structure and operation of pressure regulators is well known in the art and hence need not be described further herein.

The fluid regulating device 14 can help control or regulate the flow of fluid between the fluid source 12 and the pressure regulator 16. According to one embodiment, the fluid regulating device 14 can be a check valve that helps prevent the loss of fluid back through the pressure regulator 16 in the event that the fluid source 12 fails to provide an input fluid and corresponding pressure to the inlet of the pressure regulator 16. That is, the check valve can be used in the supply line to the pressure regulator 16 so that the load on the packing material is maintained even in the case of momentary or sustained interruption of the pressurizing fluid supply. The structure and operation of check valves is well known in the art and need not be described further herein. The pressure regulating system can also employ for example one or more pressure sensors or detectors, such as pressure gauges, to measure the pressure of the fluid in the system at selected locations. The pressure sensors can be positioned at any selected location, such as on either side of the pressure regulator 16 or between the pressure regulator and the packing loading assembly 18.

The pressure regulator 16 and/or the packing loading assembly 18 can optionally communicate with an electronic device 22 either directly or through a network 20. The pressure regulator and the packing loading assembly can communicate directly with the electronic device 22 via any suitable wireless connection, such as WiFi and Bluetooth connections. Alternatively, the devices can communicate with the electronic device 22 through a standard network 20. As is known, the network 20 an include one or more electronic devices such as servers, computers and the like. The servers can include appropriate processors, storage and memory as is known in the art. Further, suitable operational software can be stored in the storage for operating and controlling the servers and if desired one or more elements of the pressure regulating system 10. The electronic device 22 can be any suitable device, such as a server, computer, tablet, smartphone and the like. Similar to the servers of the network 20, the electronic device can also include known hardware such as one or more processors, memory and storage, as well as other structure, such as for example input devices (e.g., mouse and/or keyboard) and a display. Suitable system software can be stored either or both in the network 20 and the electronic device 22 for controlling and operating one or more elements of the pressure regulating system 10.

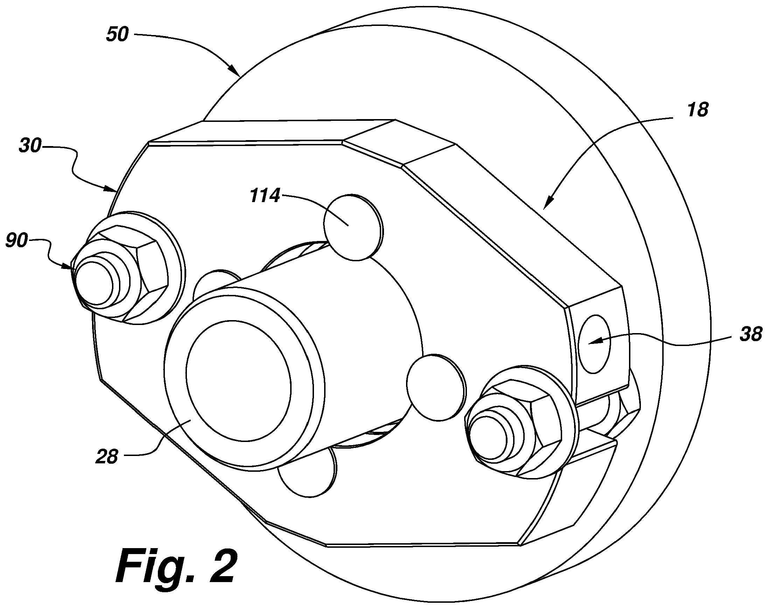

FIGS. 2-5 illustrate the features and elements of the packing loading assembly 18 of the present invention. The packing loading assembly 18 can include a gland element 30 that is coupled to stationary equipment 50 by way of a series of fastening elements 90. The stationary equipment 50, which can include for example the housing of a pump, has a rotating shaft 28 that extends outwardly therefrom and includes a process fluid that needs to be sealed within the pump housing. The stationary equipment 50 can include a main body 52 that has a plurality of fastener receiving apertures 54 formed therein. The main body 52 also has a radially inner channel 56 formed therein having a bottom surface or flange portion 58 and an axially extending wall surface 60. The channel 56 seats the packing material, such as a series of ring like packing elements 110 that form a seal between the shaft 28 and the main body 52 of the stationary equipment 50 so as to seal the process fluid therein. The channel can also seat if desired or necessary one or more bushing or bearing elements to help prevent one or more of the packing elements 110 from accidentally extruding from the channel 56. Hence, in operation, the packing elements 110 help form a seal between the elements and the shaft 28 as well as between the elements and the surfaces of the channel 56. The main body of the stationary equipment 50 has a top surface 52A and an opposed bottom surface 52B. The bottom surface 52B has a channel 62 formed therein for seating a sealing element. Those of ordinary skill in the art will readily recognize that the housing of the stationary equipment can have any selected configuration, and that the currently illustrated configuration is for purposes of illustration.

The packing loading assembly 18 can include a gland element 30 and a follower element 70 that can be pre-assembled into a cartridge or can be separate mountable elements or components. The gland element 30 has a main body 32 that has opposed top and bottom surfaces 32A and 32B, respectively, as well as a side or peripheral surface 32C. The top surface 32A has a plurality of fastener-receiving apertures 34 formed therein for receiving a fastener assembly, including the fastener element 90. The fastener element 90 can be a bolt-like element that mates with a jam nut 92 on an axially inner end and with a washer 94 and a nut 96 at an axially outer end. Likewise, the top surface 32A of the main body 32 of the gland 30 can also include a plurality of centering apertures 36 for seating a centering element, such as the centering button 114. The centering button 114 helps center the gland 30 relative to the shaft 28 during installation, as is known in the art. The bottom surface 32B of the gland 30 also includes an annular channel 40 forming an annular chamber.

The side surface 32C of the gland 30 can include one or more fluid supply ports 38 for supplying a pressurized fluid to the packing loading assembly 18 for applying a pressure to the packing elements 110 via the follower element 70. The fluid supply port 38 can include a first wide port section 38A for coupling to any selected fluid connection element, such as a pipe. The fluid supply port 38 includes a second radial extending section 38B and a third axial extending section 38C that communicates with the channel 40. The side surface of the channel 40 has a pair of opposed channels 42, 44 formed therein for seating a sealing element 46, 48, respectively. The sealing elements 46, 48 form a fluid-tight seal with the follower element 70. The fluid supply port 38 can be formed in other surfaces of the gland 30 if desired. Those of ordinary skill in the art will readily recognize that the gland can have any selected shape or configuration, and that the currently illustrated configuration is for purposes of illustration.

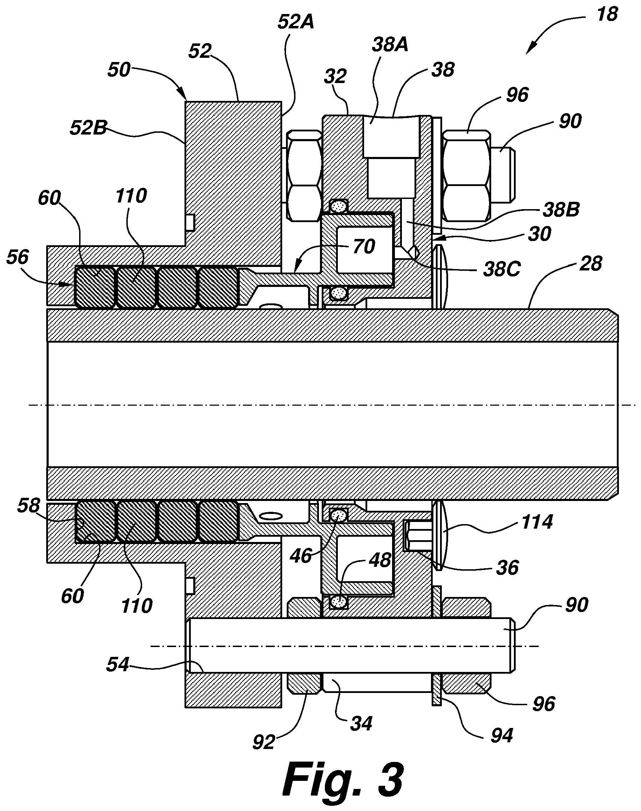

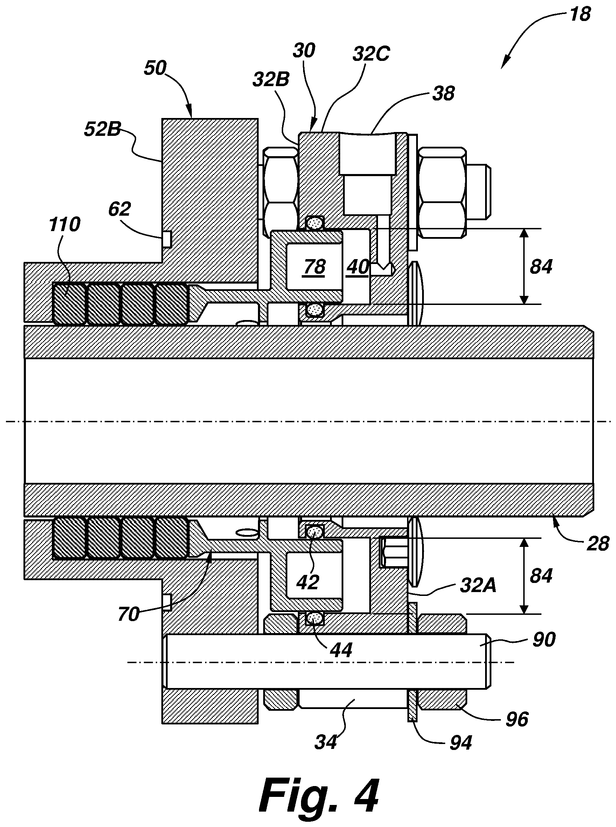

The follower element 70 is axially movable and is sized and configured for applying an axial load or force to the packing elements 110 when properly pressurized by fluid applied thereto through the fluid supply port 38. The follower element 70 is movable between a pre-loaded position (FIG. 3) and a loaded position (FIG. 4). In the pre-loaded position, the follower element 70 contacts or is slightly separated from the packing elements 110, but does not properly or sufficiently load or apply an axial force thereto. When the pressurized fluid is supplied to the fluid supply port 38, the follower element 70 moves from the pre-loaded position to the loaded position and applies an axial force or load to the packing element so as to seal the process fluid within the stationary equipment 50.

The follower element 70, as shown in FIGS. 3-5, and especially in FIG. 5, includes a main body 72 having an axial first end having a bucket like structure 74 and an opposed second end having a stem-like structure 75 having a foot portion 76. The bucket like structure 74 has a main body having a U-shaped bucket structure that forms a chamber 78 that in connection and cooperation with the channel 40 forms a pressurized chamber for axially moving the follower element 70. The bucket structure 74 has a pair of opposed walls 74A and 74B that are radially spaced apart and are connected by a bottom wall 74C. The walls 74A, 74B, 74C have inner and outer surfaces. The stem-like structure has a main body having a substantially elongated, narrow stem like shape that terminates at a terminal end in a foot portion 76. The foot portion 76 has a larger, radial, planar surface area than the stem-like structure 74 and is configured to contact the axially outermost packing element 110 and apply an axial inward force to supply an axial load to the packing elements 110. Those of ordinary skill in the art will readily recognize that the follower element can have any selected configuration, and that the currently illustrated configuration is for purposes of illustration.

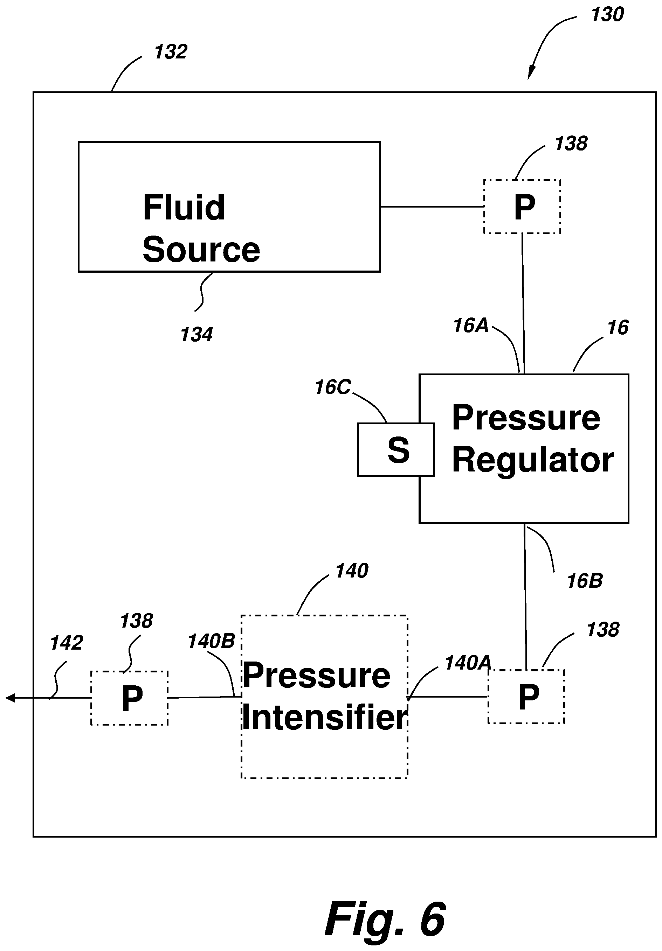

The pressure regulating system 10 can include a pressure regulating subassembly 130 that includes selected elements of the pressure regulating system, including for example at least the fluid source and the pressure regulator. FIG. 6 shows one embodiment of a self-contained pressure regulating subsystem 130 suitable for use with the packing loading assembly 18 according to the teachings of the present invention. As shown, the pressure regulating subsystem 130 can include a housing 132 that can have any selected shape or size, and preferably is formed as a box. The box can have any suitable cover element, if desired, such as a door (not shown). The housing 132 can have the pressure regulating subsystem 130 mounted therein. The illustrated pressure regulating subsystem 130 can include a self-contained pressurized fluid source 134 that can be connected by suitable fluid conduits, such as piping, to the pressure regulator 16. The fluid source 134 can be the same as or similar to the fluid source 12. The pressure regulator 16 can include the pressure setting element 16C for setting the pressure level of the fluid at the outlet 16B of the pressure regulator. A fluid regulating element, such as a check valve (not shown), can also be included in the subsystem if desired. One or more optional pressure sensors, such as pressure gauges 138, can be used to detect or sense the pressure at selected locations of the pressure regulating subsystem 130, as shown.

The illustrated pressure regulating subsystem 130 can also include an optional pressure intensifier 140. The pressure intensifier 140 can be employed to increase the pressure of the fluid exiting the pressure regulator to a higher level suitable for use with the packing loading assembly 18. Specifically, the pressure intensifier 140 has a fluid inlet 140A and a fluid outlet 140B. The fluid enters the fluid inlet 140A of the pressure intensifier at a first pressure level and exits the fluid outlet 140B at a second higher pressure level. As is known in the art, the pressure intensifier 140 can be constructed so as to provide a predetermined pressure increase. The pressure intensifier can thus be selected to provide a pressurized fluid at the fluid outlet 140B that is sufficient to provide an axial load on the packing elements 110. The pressurized fluid 142 exiting the pressure regulating subsystem 130 is then conveyed to the packing loading assembly 18 for energizing the packing elements 110.

In operation, the pressure regulating system 10 of the present invention can function and operate as follows. The packing loading assembly 18 of the present invention can be mounted to a stuffing box or stationary equipment 50 that includes a rotating shaft 28. In the channel 56 of the equipment 50, a stacked series of packing elements 110 are mounted therein. The packing loading assembly 18 includes the gland 30 and the follower element 70. And the gland 30 is coupled to the stationary equipment 50. Specifically, the foot portion 76 of the follower element is placed adjacent to and in contact with the axially outermost packing element 110. The bucket-like structure 74 of the follower element 70 seats within the channel 40 of the gland 30. The gland 30 is secured to the stationary equipment 50 by the fastener assemblies that includes the fastening element 90, the jam nut 92, and the washer 94 and nut 96. The centering device 114 can be employed to center the packing loading assembly 18 about the shaft 28. The packing loading assembly can also employ, if desired, a clip element (not shown) that can have a selected portion that seats between the follower element and the top surface of the stationary equipment for holding the follower element in the pre-loaded position during assembly and prior to operation.

The gland 30 includes a main body 32 having the channel 40 formed in the underside or bottom surface 32B to seat the upper bucket like portion of the follower element 70. The gland 30 has formed therein a fluid supply port 38 in a side surface 32C thereof that communicates with the channel 40. Additional sealing elements, such as O-rings, can be employed to help seal the pressurized fluid within the packing loading assembly. The follower element 70 has an upper portion that includes a bucket-like structure 74 that forms a chamber 78 that is positioned within the channel 40 formed in the gland 30, and an opposed lower portion that includes the foot portion 76 that is configured to contact and hence provide an axial load on the stacked packing elements 110. The combination of the channel 40 and corresponding chamber formed thereby and the chamber 78 of the bucket-like structure 74 form a pressurized fluid chamber.

The follower element 70 can be disposed in a first or initial pre-loaded position where the upper topmost surface of the bucket-like structure 74 of the follower element 70 is immediately adjacent to or contacts a floor or bottom wall surface 74C of the gland channel 40. The outer or exterior surfaces of the walls 74A, 74B of the bucket-like structure 74 can also contact if desired the side walls or surfaces of the gland channel 40. The channel 40 and the chamber 78 of the bucket-like structure 74 form in combination a fluid chamber that can be pressurized by the fluid source 12 to move the follower element 70 in an axial inward direction into the loaded or working position where the foot portion 76 of the follower element applies an axial load to the stacked set of packing elements 110. When axially loaded, the packing elements 110 help form a fluid seal to reduce or prevent leakage of the process fluid from the stationary equipment 50.

The pressure regulating system 10 provides a fluid, such as water, oil, air or nitrogen, from the fluid source 12 that passes through the fluid regulator 14 and to the pressure regulator 16. The pressure regulator 16 can be optionally remotely controlled either directly or through the network 20 by the electronic device 22. The electronic device 22 helps set or define the pressure of the fluid exiting the pressure regulator 16 by establishing or setting the pressure level. Preferably, the pressure of the fluid exiting the pressure regulator 16 can be manually set via the setting element 16C. The fluid exiting the pressure regulator 16 can be selected according to system needs. The pressurized fluid is introduced by suitable conduits or piping to the fluid supply port 38 formed in the gland 30. The fluid supply port 38 communicates with the channel 40 of the gland and cooperates with the chamber 78 of the follower element to form the pressurized fluid chamber.

The pressurized fluid acts upon the bucket-like structure 74 of the follower element 70, and specifically the fluid acts upon a piston loaded area 84 defined between the outer surface of the radially outermost wall 74A of the bucket-like structure 74 and the outer surface of the radially innermost wall 74B of the bucket-like structure 74. The piston area 84 as formed by the bucket-like portion of the follower element is sized and dimensioned so that the axial load applied to the packing elements via the follower element is sufficient to effectuate a seal of the process fluid within the stationary equipment given the pressure of the fluid supplied by the fluid source 12. Those of ordinary skill in the art will readily be able to determine the appropriate size of the piston areas based on the overall dimensions of the packing loading assembly including the sizes of the follower element and the gland, and the pressure of the source fluid and the process fluid. The force of the pressurized fluid acting upon the piston area 84 of the follower element 70 axially moves the follower element 70, when sufficiently pressurized, from the pre-loaded position into the loaded position and therebetween. That is, when sufficiently pressurized, the piston loaded follower element 70 moves axially into the second loaded working position to apply a selected loading force to the packing elements 110. In this second position, the upper bucket-like 74 portion of the follower element 70 is spaced from the floor of the gland channel 40. The fluid supply port 38 can be coupled to any suitable fluid supply.

The electronic device 22 can optionally control the amount of force applied to the packing elements by varying, regulating or controlling the pressure of the fluid with the pressure regulator 16. That is, the pressure regulator 16 can sense the pressure within the packing loading assembly 18 by sensing the fluid pressure at the fluid outlet 16B thereof. The electronic device 22 can control the outlet pressure of the pressure regulator 16 by adjusting or manipulating the setting element of the pressure regulator. The pressure applied to the packing elements 110 through the piston loaded follower element 70 can thus be varied or adjusted based on the sealing capabilities of the packing material and in real time based on the load characteristics of the packing elements 110. Specifically, the pressure of the process fluid may change during operation of the packing loading assembly, and the sealing capabilities or characteristics of the packing material may change over time. As such, the pressure within the packing loading assembly changes and hence the loading force applied to the packing elements and necessary to maintain the fluid seal changes over time as well. The electronic device 22 via the pressure regulator can vary, adjust or change the pressure of the pressurized fluid introduced to the packing loading assembly 18 to apply and maintain a selected constant or uniform pressure on the packing elements in real time. The force can thus be controlled continuously and dynamically to maintain the substantially uniform pressure on the packing elements 110. Alternatively, the pressure of the fluid supplied to the packing loading assembly 18 can be set by the pressure regulator by manually adjusting the setting element 16C of the regulator. As used herein, the term "substantially unform" or "substantially constant" is intended to include the ability to adjust, vary or control the pressure of the fluid supplied to the packing loading assembly such that the pressure varies by less than 2.0 psi, and preferably less than 1.0 psi.

According to one practice, the force applied to the packing elements 110 through the piston loaded follower element 70 can be remotely controlled through any suitable network 20. Further, the fluid supply pressure supplied to the packing loading assembly 18 can be controlled such that the pressure is automatically adjusted based on the wear characteristics of the packing material of the packing elements 110. There is no need to manually assess the sealing capabilities of the packing material and to manually adjust the force applied to the packing elements 110, such as by tightening a gland bolt, as is done in the prior art. Rather, the system 10 of the present invention allows the loading pressure applied to the packing elements 110 to be remotely controlled and to be controlled in an automated manner, thus reducing or eliminating the need for manual tightening of the gland bolts.

Further, the gland 30 and the piston loaded follower element 70 can form a cartridge that can create a hydraulic or pneumatic cylinder actuation force. Thus, the present invention improves upon conventional products that live-load pump packing by providing a relatively constant or uniform force on the packing elements 110 rather than a fluctuating force or a force that decreases over time based on the wear characteristics of the packing material as well as a decrease or change in the force profile applied by loading springs in conventional systems. Thus, according to another practice, the present invention allows an operator to manually adjust the force applied to the packing material, if needed or desired, via the setting element 16C of the pressure regulator 16.

The loading mechanism of the present invention can operate with a wide variety of packing materials, including injectable packing materials. When using injectable packing material, the stuffing box can be refilled and hence no packing gland adjustments are required to return to the original positioning as the piston is pushed back within the gland and the optimal pressure load is maintained by the pressure regulator 16.

The gland 30 and/or the piston loaded follower element 70 can be adjusted for a wide range of axial travel and pressures. The present invention thus eliminates or reduces the need for periodic manual adjustments required with traditional bolted glands.

The present invention also provides for precise packing load control, which is more accurate than typical bolted gland assemblies. The system of the present invention also provides for remote adjustment for safety (e.g., no need for manually adjusting gland bolts near a rotating shaft). Specifically, many plant regulations do not allow mechanics near rotating elements after the pump has been started. However, the system 10 of the present invention can be configured so the packing gland can be easily and remotely adjusted (i.e., from a safe distance away). Further, since the system 10 can employ existing hydraulic (i.e. water or oil) or pneumatic (i.e., air or nitrogen) systems that are present within many industrial installations, no significant retrofitting of the stationary equipment is necessary to employ the gland and follower element assembly.

In the system of the present invention, the load applied to the packing elements 110 can be relatively constant or uniform, as compared with prior art systems where the deflection of the loading structure changes over time, thus applying a non-constant or changing load to the packing elements 110.

It will thus be seen that the invention efficiently attains the objects set forth above, among those made apparent from the preceding description. Since certain changes may be made in the above constructions without departing from the scope of the invention, it is intended that all matter contained in the above description or shown in the accompanying drawings be interpreted as illustrative and not in a limiting sense.

It is also to be understood that the following claims are to cover all generic and specific features of the invention described herein, and all statements of the scope of the invention which, as a matter of language, might be said to fall therebetween. Only the claims define the scope of the invention.

## Claims

1. A pressure regulating system **(10)** for stationary equipment (50) employing a stacked set of packing elements (110), comprising
a fluid source (12) for supplying a source of fluid,
a pressure regulator (16) for regulating the pressure of the fluid to form a pressurized fluid, and
a packing loading assembly (18) for sealing a process fluid within the stationary equipment (50) and for applying an axial loading force to the packing elements **(110)** via the pressurized fluid from the pressure regulator (16),
wherein the packing loading assembly (18) comprises a follower element (70) movable in an axial direction, and a gland (30) for housing the follower element (70),
wherein the gland (30) comprises
a main body (32) having an upper surface (32A), an opposed bottom surface (32B) and a side surface (32C),
a plurality of fastener-receiving apertures (34) formed in the main body (32) for seating a fastening element (90),
**characterised by**
a gland channel (40) formed in the bottom surface (32B) of the main body (32) forming a gland pressure chamber, and
a fluid supply port (38) formed in the side surface (32C) and fluidly communicating with the gland channel (40),
wherein the follower element (70) comprises a first end having a bucket-like structure (74) and an opposed second end having a stem-like structure (75), wherein the bucket-like structure (74) has a generally U-shaped body having opposed first and second side walls (74A, 74B) and a bottom wall (74C) forming a pressure chamber (78), the bucket-like structure (74) of the follower element (70) being sized and configured for seating at least partly within the gland channel (40) of the gland (30) and wherein the stem-like structure (75) has a foot portion (76) at a terminal end thereof for contacting an axially outermost one of the plurality of packing elements **(110).**

2. The pressure regulating system of claim **1,** wherein the pressure regulator (16) has an inlet (16A) for receiving the fluid from the fluid source (12) and an outlet (16B) for supplying the pressurized fluid.

3. The pressure regulating system of claim **1,** further comprising a fluid regulator (14) disposed between the fluid source (12) and the pressure regulator for regulating the fluid flow therebetween.

4. The pressure regulating system of claim 3, wherein the fluid regulator comprises a check valve.

5. The pressure regulating system of claim **1,** wherein the gland channel (40) comprises a bottom wall surface and opposed first and second side wall surfaces, and a sealing channel (42, 44) formed in each of the opposed first and second side wall surfaces for seating a sealing element (46, 48).

6. The pressure regulating system of claim **1,** wherein the follower element (70) is movable between a first pre-loaded position where follower element (70) is disposed in an axially outermost position and a second loaded position where the follower element (70) moves axially inwardly and the foot portion (76) of the follower element contacts the axially outermost one of the plurality of packing elements **(110)** and applies a loading force thereto.

7. The pressure regulating system of claim **1,** wherein the gland channel (40) has opposed side walls that are radially separated relative to each other and are connected by a bottom wall, and wherein the movable follower element (70) is configured to move between a first pre-loaded position where the bucket-like structure (74) of the follower element is disposed in the gland channel (40) and where a top surface of the bucket-like structure contacts the bottom wall of the gland channel and a second loaded position where the follower element (70) moves axially inwardly and the top surface of the bucket-like structure (74) is axially separated from the bottom wall surface of the gland channel (40).

8. The pressure regulating system of claim 1, wherein the gland pressure chamber of the gland (30) and the pressure chamber (78) of the follower element (70) cooperate to form a pressurized chamber for selectively moving the follower element (70) in an axial direction as a function of the pressure of the fluid within the pressurized chamber.

9. The pressure regulating system of claim 2, further comprising an electronic device (22) for communicating with and controlling the pressure regulator (16) so as to control the pressure of the pressurized fluid exiting the outlet (16B) and conveyed to the packing loading assembly (18).

10. The pressure regulating system of claim 9, wherein the gland (30) has a fluid supply port (38) formed therein, and wherein the pressure regulator (16) conveys pressurized fluid to the follower element (70) through the fluid supply port (38).

11. A packing loading assembly for mounting to stationary equipment employing a stacked set of packing elements (110), comprising
a gland (30) for mounting to the stationary equipment (50), wherein the gland (30) comprises
a main body (32) having an upper surface (32A), an opposed bottom surface (32B) and a side surface (32C),
a plurality of fastener-receiving apertures (34) formed in the main body (32) for seating a fastening element (90),
a gland channel (40) formed in the bottom surface (32B) of the main body (32) forming a gland pressure chamber, and
a fluid supply port (38) formed in the side surface (32C) and fluidly communicating with the channel (40), and
an axially movable follower element (70) coupled to the gland (30) at one end and to at least one of the packing elements **(110)** at an opposed end, the movable follower element (70) having
a first end having a bucket-like structure (74) having a generally U-shaped body having opposed first and second side walls (74A, 74B) and a bottom wall (74C) forming a chamber (78), and
an opposed second end having a stem-like structure (75), having a foot portion (76) at a terminal end thereof for contacting an axially outermost one of the packing elements (110).

12. The packing loading assembly of claim 11, wherein the gland pressure chamber and the chamber (78) of the bucket-like structure (74) are fluidly coupled so as to form a pressurized chamber for axially moving the follower element (70) between a first pre-loaded position and a second loaded position.

13. The packing loading assembly of claim 12, wherein the gland channel (40) has first and second wall surfaces that are radially spaced apart and a bottom wall surface that is connected to the first and second wall surfaces, wherein when the follower element (70) is disposed in the first pre-loaded position the bucket-like structure (74) is disposed within the gland channel (40) and a top surface of the bucket-like structure (74) contacts the bottom wall surface of the gland channel (40), and when the follower element (70) is disposed in the second loaded position the top surface of the bucket-like structure (74) is axially separated from the bottom wall surface of the gland channel (40).

14. The packing loading assembly of claim 11, wherein the gland (30) has formed in the upper surface thereof a plurality of centering apertures (36), wherein each of the centering apertures (36) are sized and configured for seating a centering element (114).

## Patentansprüche

1. Druckregelsystem (10) für stationäre Anlagen (50) unter Verwendung eines gestapelten Satzes von Dichtungselementen (110), umfassend
eine Fluidquelle (12) zum Zuführen einer Quelle von Fluid,
einen Druckregler (16) zum Regeln des Drucks des Fluids, um ein druckbeaufschlagtes Fluid zu bilden, und
eine Dichtungsladebaugruppe (18) zum Abdichten eines Prozessfluids innerhalb der stationären Anlage (50) und zum Aufbringen einer axialen Belastungskraft auf die Dichtungselemente (110) über das druckbeaufschlagte Fluid von dem Druckregler (16),
wobei die Dichtungsladebaugruppe (18) ein Folgeelement (70), das in einer axialen Richtung beweglich ist, und eine Stopfbuchse (30) zum Aufnehmen des Folgeelements (70) umfasst,
wobei die Stopfbuchse (30) Folgendes umfasst
einen Hauptkörper (32) mit einer oberen Oberfläche (32A), einer gegenüberliegenden unteren Oberfläche (32B) und einer Seitenoberfläche (32C),
eine Vielzahl von Befestigungsmittelaufnahmeöffnungen (34), die in dem Hauptkörper (32) ausgebildet sind, um ein Befestigungselement (90) aufzunehmen,
**gekennzeichnet durch**
einen Stopfbuchsenkanal (40), der in der unteren Oberfläche (32B) des Hauptkörpers (32) ausgebildet ist und eine Stopfbuchsendruckkammer bildet, und
eine Fluidzufuhr-Durchlassöffnung (38), die in der Seitenoberfläche (32C) ausgebildet ist und mit dem Stopfbuchsenkanal (40) in fluidmäßiger Verbindung steht,
wobei das Folgeelement (70) ein erstes Ende mit einer becherartigen Struktur (74) und ein gegenüberliegendes zweites Ende mit einer schaftartigen Struktur (75) umfasst, wobei die becherartige Struktur (74) einen im Allgemeinen U-förmigen Körper mit gegenüberliegenden ersten und zweiten Seitenwänden (74A, 74B) und einer Bodenwand (74C), die eine Druckkammer (78) bilden, aufweist, wobei die becherartige Struktur (74) des Folgeelements (70) bemessen und konfiguriert ist, um zumindest teilweise innerhalb des Stopfbuchsenkanals (40) der Stopfbuchse (30) aufgenommen zu sein, und wobei die schaftartige Struktur (75) einen Fußabschnitt (76) an einem Abschlussende davon zum Berühren eines axial äußersten der Vielzahl von Dichtungselementen (110) aufweist.

2. Druckregelsystem nach Anspruch 1, wobei der Druckregler (16) einen Einlass (16A) zum Aufnehmen des Fluids von der Fluidquelle (12) und einen Auslass (16B) zum Zuführen des druckbeaufschlagten Fluids aufweist.

3. Druckregelsystem nach Anspruch 1, ferner umfassend einen Fluidregler (14), der zwischen der Fluidquelle (12) und dem Druckregler angeordnet ist, um den Fluidstrom dazwischen zu regeln.

4. Druckregelsystem nach Anspruch 3, wobei der Fluidregler ein Rückschlagventil umfasst.

5. Druckregelsystem nach Anspruch 1, wobei der Stopfbuchsenkanal (40) eine Bodenwandfläche und gegenüberliegende erste und zweite Seitenwandflächen und einen Dichtungskanal (42, 44), der in jeder der gegenüberliegenden ersten und zweiten Seitenwandflächen zum Aufnehmen eines Dichtungselements (46, 48) ausgebildet ist, umfasst.

6. Druckregelsystem nach Anspruch 1, wobei das Folgeelement (70) zwischen einer ersten vorgeladenen Position, in der das Folgeelement (70) in einer axial äußersten Position angeordnet ist, und einer zweiten geladenen Position, in der sich das Folgeelement (70) axial nach innen bewegt und der Fußabschnitt (76) des Folgeelements das axial äußerste der Vielzahl von Dichtungselementen (110) berührt und eine Ladekraft darauf ausübt, beweglich ist.

7. Druckregelsystem nach Anspruch 1, wobei der Stopfbuchsenkanal (40) gegenüberliegende Seitenwände aufweist, die relativ zueinander radial getrennt und durch eine Bodenwand verbunden sind, und wobei das bewegliche Folgeelement (70) konfiguriert ist, um sich zwischen einer ersten vorgeladenen Position, in der die becherartige Struktur (74) des Folgeelements in dem Stopfbuchsenkanal (40) angeordnet ist und in der eine obere Oberfläche der becherartigen Struktur die Bodenwand des Stopfbuchsenkanals berührt, und einer zweiten geladenen Position, in der sich das Folgeelement (70) axial nach innen bewegt und die obere Oberfläche der becherartigen Struktur (74) axial von der Bodenwandfläche des Stopfbuchsenkanals (40) getrennt ist, zu bewegen.

8. Druckregelsystem nach Anspruch 1, wobei die Stopfbuchsendruckkammer der Stopfbuchse (30) und die Druckkammer (78) des Folgeelements (70) zusammenwirken, um eine Druckkammer zum selektiven Bewegen des Folgeelements (70) in einer axialen Richtung als eine Funktion des Drucks des Fluids innerhalb der Druckkammer zu bilden.

9. Druckregelsystem nach Anspruch 2, ferner umfassend eine elektronische Vorrichtung (22), um mit dem Druckregler (16) zu kommunizieren und diesen zu steuern, um den Druck des druckbeaufschlagten Fluids, das den Auslass (16B) verlässt und zu der Dichtungsladebaugruppe (18) befördert wird, zu steuern.

10. Druckregelsystem nach Anspruch 9, wobei die Stopfbuchse (30) eine darin ausgebildete Fluidzufuhr-Durchlassöffnung (38) aufweist und wobei der Druckregler (16) druckbeaufschlagtes Fluid zu dem Folgeelement (70) durch die Fluidzufuhr-Durchlassöffnung (38) befördert.

11. Dichtungsladebaugruppe zum Montieren an stationären Anlagen unter Verwendung eines gestapelten Satzes von Dichtungselementen (110), umfassend
eine Stopfbuchse (30) zum Montieren an der stationären Anlage (50), wobei die Stopfbuchse (30) Folgendes umfasst
einen Hauptkörper (32) mit einer oberen Oberfläche (32A), einer gegenüberliegenden unteren Oberfläche (32B) und einer Seitenoberfläche (32C),
eine Vielzahl von Befestigungsmittelaufnahmeöffnungen (34), die in dem Hauptkörper (32) ausgebildet sind, um ein Befestigungselement (90) aufzunehmen,
einen Stopfbuchsenkanal (40), der in der unteren Oberfläche (32B) des Hauptkörpers (32) ausgebildet ist und eine Stopfbuchsendruckkammer bildet, und
eine Fluidzufuhr-Durchlassöffnung (38), die in der Seitenoberfläche (32C) ausgebildet ist und mit dem Kanal (40) in fluidmäßiger Verbindung steht, und
ein axial bewegliches Folgeelement (70), das an einem Ende mit der Stopfbuchse (30) und an einem gegenüberliegenden Ende mit mindestens einem der Dichtungselemente (110) gekoppelt ist, wobei das bewegliche Folgeelement (70) Folgendes aufweist
ein erstes Ende mit einer becherartigen Struktur (74) mit einem im Allgemeinen U-förmigen Körper mit gegenüberliegenden ersten und zweiten Seitenwänden (74A, 74B) und einer Bodenwand (74C), die eine Kammer (78) bilden, und
ein gegenüberliegendes zweites Ende mit einer schaftartigen Struktur (75), die einen Fußabschnitt (76) an einem Abschlussende davon zum Berühren eines axial äußersten der Dichtungselemente (110) aufweist.

12. Dichtungsladebaugruppe nach Anspruch 11, wobei die Stopfbuchsendruckkammer und die Kammer (78) der becherartigen Struktur (74) fluidmäßig gekoppelt sind, um eine Druckkammer zum axialen Bewegen des Folgeelements (70) zwischen einer ersten vorgeladenen Position und einer zweiten geladenen Position zu bilden.

13. Dichtungsladebaugruppe nach Anspruch 12, wobei der Stopfbuchsenkanal (40) erste und zweite Wandflächen, die radial voneinander beabstandet sind, und eine Bodenwandfläche, die mit den ersten und zweiten Wandflächen verbunden ist, aufweist, wobei, wenn das Folgeelement (70) in der ersten vorgeladenen Position angeordnet ist, die becherartige Struktur (74) innerhalb des Stopfbuchsenkanals (40) angeordnet ist und eine obere Oberfläche der becherartigen Struktur (74) die Bodenwandfläche des Stopfbuchsenkanals (40) berührt, und, wenn das Folgeelement (70) in der zweiten geladenen Position angeordnet ist, die obere Oberfläche der becherartigen Struktur (74) axial von der Bodenwandfläche des Stopfbuchsenkanals (40) getrennt ist.

14. Dichtungsladebaugruppe nach Anspruch 11, wobei die Stopfbuchse (30) eine in der oberen Oberfläche davon ausgebildete Vielzahl von Zentrieröffnungen (36) aufweist, wobei jede der Zentrieröffnungen (36) bemessen und konfiguriert ist, um ein Zentrierelement (114) aufzunehmen.

## Revendications

1. Système de régulation de pression (10) pour équipement fixe (50) utilisant un ensemble empilé d'éléments de garniture (110), comprenant
une source de fluide (12) pour fournir une source de fluide,
un régulateur de pression (16) pour réguler la pression du fluide pour former un fluide sous pression, et
un ensemble de chargement de garniture (18) pour sceller un fluide de processus à l'intérieur de l'équipement fixe (50) et pour appliquer une force de chargement axiale aux éléments de garniture (110) par l'intermédiaire du fluide sous pression en provenance du régulateur de pression (16),
ledit ensemble de chargement de garniture (18) comprenant un élément suiveur (70) mobile dans une direction axiale et un presse-étoupe (30) permettant de loger l'élément suiveur (70),
ledit presse-étoupe (30) comprenant
un corps principal (32) comportant une surface supérieure (32A), une surface inférieure (32B) opposée et une surface latérale (32C),
une pluralité d'ouvertures de réception d'élément de fixation (34) formées dans le corps principal (32) pour recevoir un élément de fixation (90), ledit système étant **caractérisé par**
un canal de presse-étoupe (40) formé dans la surface inférieure (32B) du corps principal (32), formant une chambre de pression de presse-étoupe, et
un orifice d'alimentation en fluide (38) formé dans la surface latérale (32C) et communiquant fluidiquement avec le canal de presse-étoupe (40),
ledit élément suiveur (70) comprenant une première extrémité comportant une structure en forme de godet (74) et une seconde extrémité opposée comportant une structure en forme de tige (75), ladite structure en forme de godet (74) comportant un corps généralement en forme de U comportant des première et seconde parois latérales (74A, 74B) opposées et une paroi inférieure (74C) formant une chambre de pression (78), ladite structure en forme de godet (74) de l'élément suiveur (70) étant dimensionnée et configurée pour se loger au moins en partie à l'intérieur du canal de presse-étoupe (40) du presse-étoupe (30) et ladite structure en forme de tige (75) comportant une partie pied (76) au niveau d'une extrémité terminale de celle-ci pour entrer en contact avec un élément de garniture axialement le plus à l'extérieur parmi la pluralité d'éléments de garniture (110).

2. Système de régulation de pression selon la revendication **1,** ledit régulateur de pression (16) comportant une entrée (16A) pour recevoir le fluide en provenance de la source de fluide (12) et une sortie (16B) pour fournir le fluide sous pression.

3. Système de régulation de pression selon la revendication **1,** comprenant en outre un régulateur de fluide (14) disposé entre la source de fluide (12) et le régulateur de pression pour réguler le débit de fluide entre eux.

4. Système de régulation de pression selon la revendication 3, ledit régulateur de fluide comprenant un clapet anti-retour.

5. Système de régulation de pression selon la revendication **1,** ledit canal de presse-étoupe (40) comprenant une surface de paroi inférieure et des première et seconde surfaces de paroi latérale opposées, et un canal d'étanchéité (42, 44) formé dans chacune des première et seconde surfaces de paroi latérale opposées pour loger un élément d'étanchéité (46, 48).

6. Système de régulation de pression selon la revendication 1, ledit élément suiveur (70) étant mobile entre une première position préchargée où l'élément suiveur (70) est disposé dans une position axialement la plus à l'extérieur et une seconde position chargée où l'élément suiveur (70) se déplace axialement vers l'intérieur et la partie pied (76) de l'élément suiveur entre en contact avec l'élément de garniture axialement le plus à l'extérieur de la pluralité d'éléments de garniture (110) et lui applique une force de charge.

7. Système de régulation de pression selon la revendication 1, ledit canal de presse-étoupe (40) comportant des parois latérales opposées qui sont séparées radialement les unes des autres et sont reliées par une paroi inférieure, et ledit élément suiveur mobile (70) étant configuré pour se déplacer entre une première position préchargée où la structure en forme de godet (74) de l'élément suiveur est disposée dans le canal de presse-étoupe (40) et où une surface supérieure de la structure en forme de godet entre en contact avec la paroi inférieure du canal de presse-étoupe et une seconde position chargée où l'élément suiveur (70) se déplace axialement vers l'intérieur et la surface supérieure de la structure en forme de godet (74) est séparée axialement de la surface de paroi inférieure du canal de presse-étoupe (40).

8. Système de régulation de pression selon la revendication **1,** ladite chambre de pression de presse-étoupe du presse-étoupe (30) et ladite chambre de pression (78) de l'élément suiveur (70) coopérant pour former une chambre sous pression pour déplacer de manière sélective l'élément suiveur (70) dans une direction axiale en fonction de la pression du fluide à l'intérieur de la chambre sous pression.

9. Système de régulation de pression selon la revendication 2, comprenant en outre un dispositif électronique (22) pour communiquer avec le régulateur de pression (16) et le commander de manière à commander la pression du fluide sous pression sortant de la sortie (16B) et acheminé vers l'ensemble de chargement de garniture (18).

10. Système de régulation de pression selon la revendication 9, ledit presse-étoupe (30) comportant un orifice d'alimentation en fluide (38) formé à l'intérieur, et ledit régulateur de pression (16) acheminant le fluide sous pression vers l'élément suiveur (70) par l'intermédiaire de l'orifice d'alimentation en fluide (38).

11. Ensemble de chargement de garniture destiné à être monté sur un équipement fixe utilisant un ensemble empilé d'éléments de garniture (110), comprenant
un presse-étoupe (30) à monter sur l'équipement fixe (50), le presse-étoupe (30) comprenant
un corps principal (32) comportant une surface supérieure (32A), une surface inférieure (32B) opposée et une surface latérale (32C),
une pluralité d'ouvertures de réception d'élément de fixation (34) formées dans le corps principal (32) pour recevoir un élément de fixation (90),
un canal de presse-étoupe (40) formé dans la surface inférieure (32B) du corps principal (32), formant une chambre de pression de presse-étoupe, et
un orifice d'alimentation en fluide (38) formé dans la surface latérale (32C) et communiquant fluidiquement avec le canal (40), et
un élément suiveur (70) mobile axialement, accouplé au presse-étoupe (30) au niveau d'une extrémité et à au moins un des éléments de garniture **(110)** au niveau d'une extrémité opposée, l'élément suiveur mobile (70) comportant
une première extrémité comportant une structure en forme de godet (74) comportant un corps généralement en forme de U comportant des première et seconde parois latérales (74A, 74B) opposées et une paroi inférieure (74C) formant une chambre (78), et
une seconde extrémité opposée comportant une structure en forme de tige (75), comportant une partie pied (76) au niveau d'une extrémité terminale de celle-ci pour entrer en contact avec un élément de garniture axialement le plus extérieur parmi les éléments de garniture (110).

12. Ensemble de chargement de garniture selon la revendication **11,** ladite chambre de pression de presse-étoupe et ladite chambre (78) de la structure en forme de godet (74) étant accouplées fluidiquement de manière à former une chambre sous pression pour déplacer axialement l'élément suiveur (70) entre une première position préchargée et une seconde position chargée.

13. Ensemble de chargement de garniture selon la revendication 12, ledit canal de presse-étoupe (40) comportant des première et seconde surfaces de paroi qui sont espacées radialement et une surface de paroi inférieure qui est reliée aux première et seconde surfaces de paroi, lorsque l'élément suiveur (70) est disposé dans la première position préchargée, ladite structure en forme de godet (74) étant disposée à l'intérieur du canal de presse-étoupe (40) et une surface supérieure de la structure en forme de godet (74) entrant en contact avec ladite surface de paroi inférieure du canal de presse-étoupe (40), et lorsque l'élément suiveur (70) est disposé dans la seconde position chargée, ladite surface supérieure de la structure en forme de godet (74) étant séparée axialement de ladite surface de paroi inférieure du canal de presse-étoupe (40).

14. Ensemble de chargement de garniture selon la revendication **11,** ledit presse-étoupe (30) comportant une pluralité d'ouvertures de centrage (36) formées dans sa surface supérieure, chacune des ouvertures de centrage (36) étant dimensionnée et configurée pour loger un élément de centrage (114).
